# Europäisches Patentamt

# European Patent Office

## Office européen des brevets

(19)

(11) Veröffentlichungsnummer: **0 299 019 B1**

# (12) EUROPÄISCHE PATENTSCHRIFT

(45) Veröffentlichungstag der Patentschrift: **14.11.90**

(51) Int. Cl.⁵: **F 16 H 61/30**

(21) Anmeldenummer: **88900809.0**

(22) Anmeldetag: **16.01.88**

(86) Internationale Anmeldenummer:
**PCT/DE88/00018**

(87) Internationale Veröffentlichungsnummer:
**WO 88/05510 28.07.88 Gazette 88/17**

(54) SERVOANTRIEB ZUM BETÄTIGEN EINER SCHALTSTANGE EINES STUFENGETRIEBES EINES KRAFTFAHRZEUGES.

(30) Priorität: **22.01.87 DE 3701690**

(43) Veröffentlichungstag der Anmeldung:
**18.01.89 Patentblatt 89/03**

(45) Bekanntmachung des Hinweises auf die Patenterteilung:
**14.11.90 Patentblatt 90/46**

(84) Benannte Vertragsstaaten:
**AT BE DE FR GB IT NL SE**

(56) Entgegenhaltungen:
**DE-C-3 128 266**
**US-A-2 073 108**

(73) Patentinhaber: **GAS Gesellschaft für Antriebs- und Steuerungstechnik mbH & Co.KG**
**Leopoldstrasse 1**
**D-7742 St. Georgen/Schwarzwald (DE)**

(72) Erfinder: **GOEDECKE, Wolf-Dieter**
**Bachweg 12**
**D-7731 Unterkirnach (DE)**
Erfinder: **SCHWENZER, Reinhard**
**Storzenberg 4**
**D-7742 St. Georgen (DE)**

(74) Vertreter: **Witte, Alexander, Dr.-Ing.**
**Witte, Weller & Hilgenfeldt Patent- und Rechtsanwälte Augustenstrasse 7**
**D-7000 Stuttgart 1 (DE)**

## Beschreibung

Die Erfindung betrifft einen Servoantrieb zum Betätigen einer Schaltstange eines Stufengetriebes eines Kraftfahrzeuges, bei dem die Schaltstange mittels eines ersten hilfskraftbetätigten linearen Stellgliedes axial verschiebbar und mittels eines zweiten hilfskraftbetätigten linearen Stellgliedes über eine Kurbel verdrehbar ist.

Ein derartiger Servoantrieb ist aus der DE—C—31 28 266 bekannt.

Bie dem bekannten Servoantrieb werden Pneumatikzylinder verwendet, um die Schaltstange axial zu verschieben und um ihre Längsachse zu verdrehen. Dabei hat sich jedoch herausgestellt, daß insbesondere das Erzeugen der Drehbewegung der Schaltstange Schwierigkeiten bereiten kenn, weil zum Verdrehen der Schaltstange ein verhältnismäßig hohes Drehmoment von beispielsweise 80 Nm oder mehr erforderlich ist. Dieses relativ hohe Drehmoment muß vor allem auch bei niedrigen Temperaturen von −40°C aufgebracht werden können, weil bei diesen niedrigen Temperaturen das Getriebeöl besonders viskos ist und daher die Betätigungskraft bzw. das Betätigungsmoment der Schaltstange besonders hoch sein muß, um Fehlschaltungen zu vermeiden.

Diese Anforderungen können zwar auch mit pneumatischen Stellzylindern erreicht werden, die Stellzylinder müssen jedoch, um die erforderlichen Kräfte bzw. Momente bereitzustellen, verhältnismäßig groß ausgebildet sein, wobei naturgemäß bei extrem niedrigen Temperaturen auch die Eigenreibung des Kolben/Zylindersystems eines pneumatischen Stellgliedes größer wird. Die relativ große Bauform der pneumatischen Stellzylinder bringt es darüberhinaus auch mit sich, daß auch verhältnismäßig große Luftvolumina erforderlich sind, um die erforderlich Stellbewegung auszuführen.

Aus der US—A—2 073 108 ist eine Gangschalteinrichtung bekannt, bei der eine mit Unterdruck betätigbare Membran eine Zahnstange linear und axial auslenkt. Die Zahnstange kämmt mit einem Ritzel, dessen Drehbewegung zur Gangwahl dient. Bei dieser bekannten Einrichtung ist somit eine anwendige Übersetzung zwischen Zahnstange und Ritzel erforderlich, um die lineare Auslenkung des Membran in eine Drehbewegung umzusetzen.

Der Erfindung liegt daher die Aufgabe zugrunde, einen Servoantrieb der eingangs genannten Art dahingehend weiterzubilden, daß bei möglichst geringen baulichen Abmessungen und bei geringem Volumen des Druckfluids die erforderlichen großen Betätigungskräfte bzw. -momente bereitgestellt werden können.

Diese Aufgabe wird erfindungsgemäß dadurch gelöst, daß das zweite Stellglied mindestens eine in einer Druckdose auslenkbaren Membran aufweist, die mit einem Ende der Kurbel verbunden ist.

Die der Erfindung zugrundeliegende Aufgabe wird auf diese Weise gelöst, weil eine Membran eine von der Betriebstemperatur weitgehend unabhängige Eigenreibung aufweist, so daß auch bei tiefen Umgebungstemperaturen die Betätigungskraft unvermindert zur Verfügung gestellt werden kann. Eine Membran kann darüberhinaus durch Vergrößerung der Membranfläche verhältnismäßig große Betätigungskräfte ausüben, wobei nur geringe Fluidvolumina erforderlich sind. Auch ist mit Membranen eine sehr flache platzsparende Bauweise möglich, so daß der erfindungsgemäße Servoantrieb auch ohne große konstruktive Änderungen bei bereits vorhandenen Kraftfahrzeugen serienmäßig oder als Nachrüstung eingesetzt werden kann.

Bei der Ausgestaltung der Erfindung sind zwei Membranen über einen Verbindungsbolzen miteinander verbunden und die Kurbel ist mit ihrem Ende drehbar im Verbindungsbolzen gelagert.

Diese Maßnahme hat den Vorteil, daß eine doppelte Betätigungskraft bei nur unmerklicher Vergrößerung der Außenabmessungen des Servoantriebs erreicht werden kann.

Bei einem bevorzugten Ausführungsbeispiel der Erfindung weist das erste Stellglied eine in einer weiteren Druckdose auslenkbare weitere Membran auf, die mit dem freien Ende der Schaltstange verbunden ist.

Auch diese Maßnahmen ergeben die bereits genannten Vorteile der hohen Betätigungskräfte bei kleinem baulichem Volumen, die sich jetzt für die lineare Verschiebung der Schaltstange auswirken.

Bei einer Variante der Erfindung sind die Membranen beidseitig mit demselben Druck beaufschlagbar und weisen auf beiden Seiten unterschiedlich große Angriffsflächen für den Druck auf.

Diese Maßnahme hat den Vorteil, daß eine sehr einfache Beschaltung für die Steuerung des Druckfluids ausreicht, weil die jeweils kleinere Membranfläche ständig mit dem Druck beaufschlagt werden kann, so daß eine definierte Ausgangsstellung gewährleistet ist. Wird auch die andere, größere Membranfläche mit demselben Druck beaufschlagt, überdrückt diese Seite der Druckdose aufgrund der größeren wirksamen Membranfläche den Druck auf der anderen Seite der Membran, so daß eine definierte zweite Betriebsstellung gewährleistet ist.

Entsprechendes gilt, wenn bei einer weiteren Ausgestaltung der Erfindung mit zwei Membranen beide Membranen jeweils von einer Seite mit demselben Druck beaufschlagbar sind und die Membranen auf diesen Seiten unterschiedlich große Angriffsfläche für den Druck aufweisen.

Bei praktischen Ausführungsbeispielen der Erfindung hat sich gezeigt, daß eine besonders gute Wirkung dann erzielt wird, wenn die wirksame Länge der Kurbel etwa des Doppelte des Durchmessers der Schaltstange beträgt und/oder wenn der wirksame Durchmesser der mindestens einen Membran mehr als das Vierfache der wirksamen Länge der Kurbel beträgt.

Bei diesen Dimensionierungen ergeben sich die erforderlichen Betätigungskräfte bzw. -momente mit üblichen Drücken, wie sie an Bord eines Kraftfahrzeuges beispielsweise als Pneumatik-Überdrücke zur Verfügung gestellt werden können, wobei sich gleichzeitig eine Baugröße einstellt, die ohne Probleme in bereits existierenden Kraftfahrzeugen im Getriebebereich untergebracht werden kann.

Bei einer weiteren bevorzugten Ausführungsform der Erfindung werden Druck-Servoventile oder Druck-Proportionalventile zur Ansteuerung der Druckdosen eingesetzt. Dies ermöglich eine gezielte Kraftsteuerung in der eigentlichen Schaltachse und damit eine Verbesserung des Synchronisierverhaltens, verglichen mit dem Einsatz von Wege-Servoventilen oder Schaltventilen.

Weitere Vorteile ergeben sich aus der Beschreibung und der beigefüten Zeichnung.

Ausführungsbeispiele der Erfindung sind in der Zeichnung dargestellt und werden in der nachfolgenden Beschreibung näher erläutert. Es zeigen:

Fig. 1 eine Seitenansicht, im Schnitt, eines Ausführungsbeispieles eines erfindungsgemäßen Servoantriebes;

Fig. 2 eine Draufsicht der Anordnung gemäß Fig. 1 entlang der Linie II—II von Fig. 1;

Fig. 3 ein erstes Ausführungsbeispiel einer Schaltungsanordnung zur Steuerung des Servoantriebes gemäß den Fig. 1 und 2;

Fig. 4 eine Darstellung ähnlich Fig. 3 für eine Variante der Schaltungsanordnung.

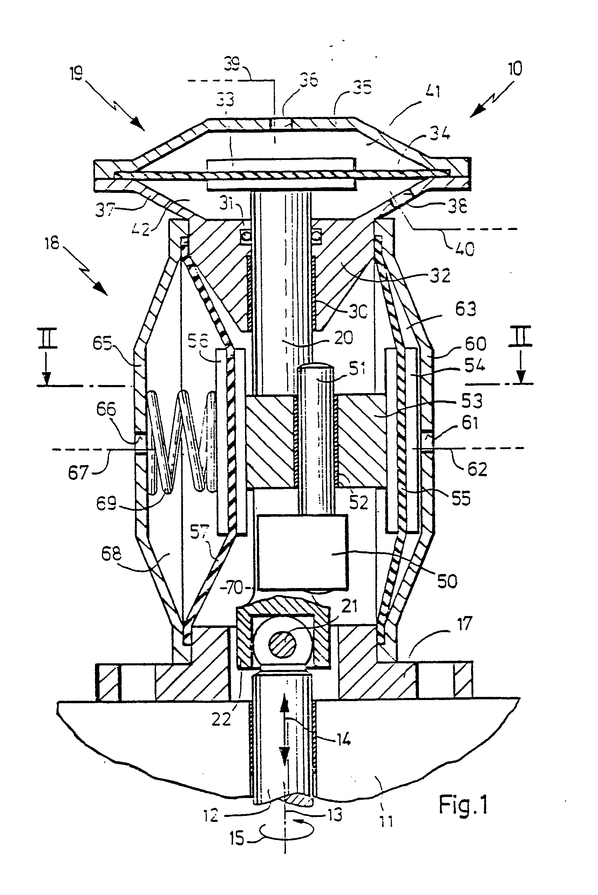

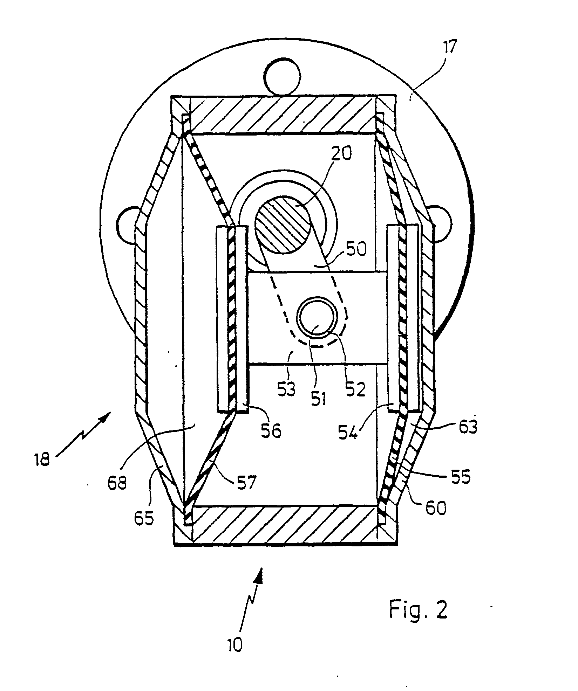

In den Fig. 1 und 2 ist mit 10 gesamthaft ein Servoantrieb bezeichnet, wie er seitlich an ein mit 11 angedeutetes Stufengetriebe eines Kraftfahrzeuges angeflanscht werden kann. Aus dem Stufengetriebe 11 tritt eine Schaltstange 12 zur Betätigung des Stufengetriebes 11 aus. Die Schaltstange 12 ist entlang ihrer Längsachse 13 in Richtung eines ersten Pfeiles 14 axial verschiebbar und um die Längsachse 13, wie mit einem zweiten Pfeil 15 angedeutet, verdrehbar, um die verschiedenen Gänge des Stufengetriebes 11 durch gezieltes Verschieben entlang des ersten Pfeiles 14 bzw. Verdrehen um den zweiten Pfeil 15 einzulegen.

Der Servoantrieb 10 ist mittels einer Montageplatte 17 so an das Stufengetriebe 11 angeflanscht, daß die Schaltstange 12 in noch zu beschreibender Weise betätigt werden kann. Von der Montageplatte 17 erstreckt sich vom Stufengetriebe 11 weg ein Gehäuse 18, das oben mit einem Aufsatz 19 abgeschlossen ist. Das Gehäuse 18 wird axial von einer Betätigungsstange 20 durchsetzt, die koaxial oder parallelachsig zur Schaltstange 12 angeordnet ist. Mittels eines Stiftes 21 ist die Betätigungsstange 20 in axialer Richtung und in Verdrehrichtung fest mittels eines Kupplungsteils 22 auf die Schaltstange 12 aufgesetzt.

An ihrem von der Schaltstange 12 abgewandten Ende durchsetzt die Betätigungsstange 20 eine Führungsbuchse 30 sowie eine O-Ring-Dichtung 31 eines Führungsteils 32 des Aufsatzes 19. Am freien Ende der Betätigungsstange 20 ist ein Befestigungsteil 33 angeordnet, das eine erste Membran 34 in deren Mitte einschließt. Die erste Membran 31 ist zwischen einer oberen Wand 35, die einen ersten Fluidanschluß 36 aufweist sowie einer unteren Wand 37, die einen zweiten Fluidanschluß 38 aufweist, eingespannt. Eine erste Leitung 39 ist an den ersten Anschluß 36 und eine zweite Leitung 40 ist an den zweiten Anschluß 38 angeschlossen. Auf diese Weise kann ein erster Raum 41 zwischen der ersten Membran 34 und der oberen Wand 35 sowie ein zweiter Raum 42 zwischen der ersten Membran 34 und der unteren Wand 37 mit einem Druckfluid unter Erzeugung eines Über- oder Unterdruckes beaufschlagt werden.

Von der Betätigungsstange 20 erstreckt sich kurz oberhalb des Kupplungsteils 22 radial eine mit der Betätigungsstange 20 drehstarr verbundene Kurbel 50. An ihrem freien Ende weist die Kurbel 50 einen sich parallel zur Betätigungsstange 20 erstreckenden Zapfen 51 auf. Der Zapfen 51 ist in einem Drehlager 52 eines Verbindungsbolzens 53 gelagert. Der Verbindungsbolzen 53 ist mittels eines Befestigungsteils 54 an seinem einen freien Ende mit einer zweiten Membran 55 sowie an seinem anderen freien Ende mittels eines Befestigungsteils 56 an einer dritten Membran 57 angeschlossen.

An ihrer vom Verbindungsbolzen 53 abgewandte Seite steht die zweite Membran 55 einer rechten Wand 60 gegenüber, die einen dritten Fluidanschluß 61 aufweist, an den eine dritte Leitung 62 anschließbar ist. Die rechte Wand 60 definiert mit der zweiten Membran 55 einen dritten Raum 63.

In entsprechender Weise steht der dritten Membran 57 eine linke Wand 65 des Gehäuses 18 gegenüber, die mit einem vierten Fluidanschluß 66 versehen ist, an den eine vierte Leitung 67 anschließbar ist. Hierdurch wird ein vierter Raum 68 zwischen linker Wand 65 und dritter Membran 57 definiert.

Der zwischen der zweiten Membran 55 und der dritten Membran 57 eingeschlossene Innenraum ist mit 70 bezeichnet.

Die Wirkungsweise des Servoantriebes 10 gemäß den Fig. 1 und 2 ist wie folgt:

Um die Schaltstange 12 in Richtung des ersten Pfeiles 14 axial zu verschieben, ist es lediglich erforderlich, über die erste Leitung 39 oder die zweite Leitung 40 in den ersten Raum 41 oder den zweiten Raum 42 je nach Bewegungsrichtung einen Über- und oder Unterdruck einzuleiten. Je nach Druckdifferenz zwischen den Räumen 41 und 42 wird dann die erste Membran 34 nach oben oder unten ausgelenkt und verschiebt über die Betätigungsstange 20 sowie das Kupplungsteil 22 mit Stift 21 die Schaltstange 12 in der gewünschten axialen Richtung.

Soll hingegen die Schaltstange 12 in Richtung des zweiten Pfeiles 15 um ihre Längsachse 13 verdreht werden, so wird über die dritte Leitung 62 oder die vierte Leitung 67 ein Fluid in den dritten Raum 63 oder den vierten Raum 68 eingeleitet. Je nach Druckdifferenz in den Räumen 63 und 68 bewegt sich dann der die Membranen 55 und 57 verbindende Verbindungsbolzen 53 in der Darstellung der Fig. 1 und 2 nach rechts oder links und verschwenkt auf diese Weise die Kurbel 50, so daß über die Betätigungsstange 20 und das Kupplungsteil 22 mit Stift 21 die Schaltstange 12 in der gewünschten Weise verdreht wird. Da die Membranen 55, 57 naturgemäß elastisch ausgebildet sind, kann das Drehlager 52 als reines Drehlager ausgebildet sein, weil die geringfügige radiale Auslenkung des Verbindungsbolzens 53 nach oben und unten in der Dartellung der Fig. 2 beim Verschwenken der Kurbel 50 durch die Elastizität der Membran 55 und 57 aufgefangen wird.

Durch entsprechende Dimensionierung der Membranen 34, 55 und 57 können erhebliche Betätigungskräfte für das Verschieben der Betätigungsstange 20 bzw. für das Verschwenken der Kurbel 50 aufgebracht werden.

Beträgt beispielsweise die wirksame Länge der Kurbel 50, d.h. der Abstand zwischen den Längsachsen der Betätigungsstange 20 und des Zapfens 51 etwa das Doppelte des Durchmessers der Schaltstange 12 und beträgt der wirksame Durchmesser der Membranen 55, 57 beispielsweise mehr als das Vierfache der wirksamen Länge der Kurbel 50, so kann dann, wenn ein Luftdruck verwendet wird, wie er üblicherweise an Bord eines Kraftfahrzeuges erzeugt werden kann, ein Drehmoment für die Schaltstange 12 von 80 Nm oder mehr erzeugt werden.

Da die Membranen 55, 57 lediglich elastisch eingespannt sind und bei ihrer Bewegung keine von der Betriebstemperatur abhängige Reibung überwunden werden muß, ist die Anordnung auch bei sehr tiefen Temperaturen von −40°C und darunter ohne Verminderung des aufbringbaren Drehmomentes einsetzbar.

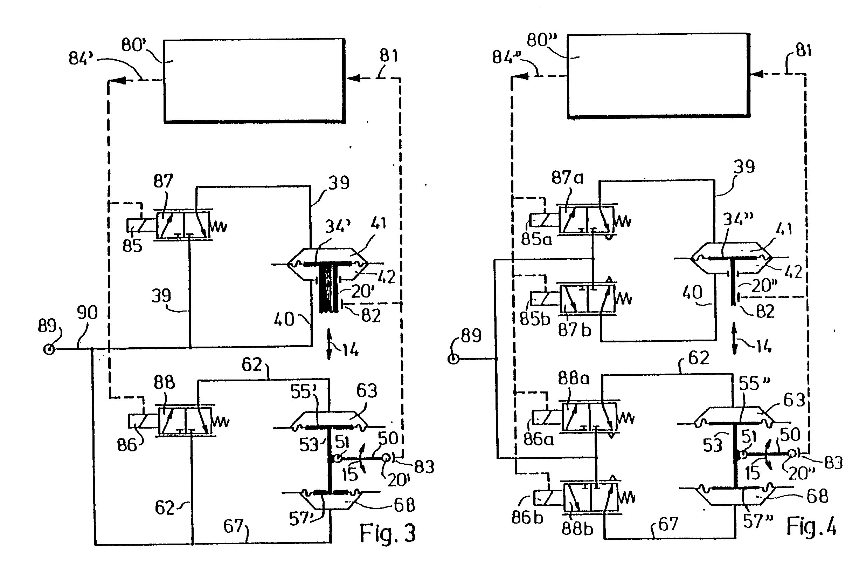

Fig. 3 zeigt ein erstes Schaubild einer Steuerschaltung zur Betätigung des Servoantriebes gemäß den Fig. 1 und 2.

Ein zentrales elektronisches oder fluidisches Steuergerät 80' empfängt über Eingangsleitungen 81 Signale von einem Lagesensor 82 sowie einem Winkelsensor 83. Die Sensoren 82 und 83 erfassen die Verschiebung bzw. Verdrehung der Schaltstange 12 bzw. der Betätigungsstange 20 in Richtung der Pfeile 14 und 15 von Fig. 1 und liefern damit dem Steuergerät 80' Istwerte, die mit in dem Steuergerät 80' abgespeicherten Sollwerten verglichen werden.

Je nach Differenz zwischen den Sollwerten und den Istwerten und je nach vorgegebenen Schaltbefehlen, die in an sich bekannter Weise erzeugt werden, gibt das Steuergerät 80' an Ausgangsleitungen 84' Ausgangssignale zur Betätigung des Servoantriebes 10 ab.

Hierzu sind beim Ausführungsbeispiel der Fig. 3 die Ausgangsleitungen 84' an Wicklungen 85 und 86 zweier 3/2-Magnetventile 87 und 88 angeschlossen. Wenn hier von Magnetventilen gesprochen wird, so ist dies nur beispielhaft gemeint. Selbstverständlich können statt magnetisch betätigter Ventile auch z.B. fluidisch oder piezoelektrisch betätigte Ventile eingesetzt werden. Von einem zentralen Druckanschluß 89, beispielsweise einem zentralen Druckluftanschluß führt eine Leitung 90, die ständig einen Überdruck oder ständig einen Unterdruck führt zu den Magnetventilen 87, 88 bzw. den Membran-Stellgliedern.

So ist die erste Leitung 39 an die Leitung 90 angeschlossen und in die erste Leitung 39 ist das eine 3/2-Magnetventil 87 eingeschaltet. Die zweite Leitung 40 ist unmittelbar an die Leitung 90 angeschlossen.

Die dritte Leitung 62, in die das andere 3/2-Magnetventil 88 eingeschaltet ist, ist ebenfalls an die Leitung 90 angeschlossen. Auch die vierte Leitung 67 steht mit der Leitung 90 in Verbindung.

Beim Ausführungsbeispiel der Fig. 3 sind die Membranen in spezieller Weise ausgebildet. Die erste Membran 34' hat an ihrer Oberseite, in der Darstellung von Fig. 3, eine größere wirksame Fläche als an ihrer Unterseite. Dies kann beispielsweise durch eine stark verdickte Betätigungsstange 20' erreicht werden, die einen großen Teil der wirksamen Unterseite der Membran 34' überdeckt.

In entsprechender Weise ist die zweite Membran 55' in ihrer wirksamen Oberfläche gegenüber dem dritten Raum 63 wesentlich größer ausgebidet als die dritte Membran 57'.

Bei der in Fig. 3 eingezeichneten Stellung der Magnetventile 87 und 88 liegt ständig der Druck der Leitung 90 an dem zweiten Raum 42 und dem vierten Raum 68. Der erste Raum 41 und der dritte Raum 63 sind hingegen drucklos. Aufgrund dessen befinden sich alle Membranen 34', 55' und 57' in einer ersten oberen Endlage, d.h., die Betätigungsstange 20' mit Schaltstange 12 ist nach oben herausgezogen und in der Darstellung von Fig. 3 in Uhrzeigerrichtung verdreht.

Werden nun die Magnetventile 87, 88 in die in Fig. 3 nicht eingezeichnete Stellung umgeschaltet, so wird zusätzlich im ersten Raum 41 sowie im dritten Raum 63 der Druck aus der Leitung 90 wirksam. Wegen die größeren effektiven Oberfläche der Membranen 34' bzw. 55' als Begrenzung der Räume 41 bzw. 63 wird nun jedoch eine größere Kraft auf die Membranen 34' und 55' nach unten ausgeübt, als dies durch den Druck (multipliziert mit der effektiv geringeren Membranoberfläche) in den Räumen 42 und 68 der Fall ist. Infolgedessen wird die Betätigungsstange 20' nach unten gedrückt und gleichzeitig im Gegenuhrzeigersinn verdreht.

Es versteht sich, daß die Magnetventile 87 und 88 selbstverständlich auch einzeln geschaltet werden können, um die Verschiebung und Verdrehung der Betätigungsstange 20' inzeln einstellen zu können.

Bei der Steuerschaltung gemäß Fig. 4 sind die von der Darstellung gemäß Fig. 3 abweichenden Komponenten mit einem '' versehen. Die erste Membran 34'' hat auf beiden Seiten annähernd dieselbe wirksame Oberfläche und die zweite Membran 55'' hat dieselbe wirksame Oberfläche wie die dritte Membran 57''. Um auch in diesem Falle eine Verschiebung und Verdrehung der Betätigungsstange 20'' in beiden Richtungen zu ermöglichen, sind die Magnetventile jeweils doppelt mit 87a, 87b und 88a bzw. 88b ausgeführt. Das Steuergerät 80'' versorgt mit seinen Ausgangsleitungen 84'' in entsprechender Weise Wicklungen 85a, 85b, 86a und 86b der Magnetventile 87a, 87b, 88a und 88b.

Bei der in Fig. 4 eingezeichneten Stellung der Magnetventile sind alle Räume 41, 42, 63 und 68 drucklos und die Membranen 34'', 55'' und 57'' befinden sich in einer neutralen Zwischenstellung. Durch selektives Betätigen der Magnetventile 87a, 87b, 88a und 88b kann nun jeder dieser Räume 41, 42, 63 und 68 selektiv mit Überdruck (oder Unterdruck) beaufschlagt werden, wobei der jeweils gegenüberliegende Raum drucklos bleibt. Auf diese Weise können die Membranen 34'', 55'' und 57'' in der gewünschten Weise nach oben oder unten ausgelenkt oder wieder in die neutrale Zwischenstellung zurückgeführt werden.

Es versteht sich, daß als Druckfluid Druckluft oder auch Drucköl verwendet werden kann. Auch ist alternativ die Verwendung von Überdruck und Unterdruck möglich und es kann zur Auslenkung einer Membran auch eine unterschiedliche Druckbeaufschlagung auf beiden Seiten der Membran mit Überdruck und Unterdruck zum beschleunigten Umschalten der Membran aufgebracht werden.

Als Magnetventile können Wege-Servo-Ventile oder Wege-Proportionalventile oder auch Druck-Servoventile bzw. Druck-Proportionalventile eingesetzt werden, mit denen ein besonders weicher und getriebeschonender Synchronisiervorgang bei hohen Schaltgeschwindigkeiten erzielt werden kann.

Es versteht sich ferner, daß auch Federrückstellungen, wie in Fig. 1 mit 69 angedeutet, vorgesehen werden können, um die Membranen in eine definierte Ausgangs- oder Endlange zu bringen.

## Patentansprüche

1. Servoantrieb zum Betätigen einer Schaltstange (12) eines Stufengetriebes (11) eines Kraftfahrzeuges, bei dem die Schaltstange (12) mittels eines ersten hilfskraftbetätigten linearen Stellgliedes (30 bis 42) axial verschiebbar und mittels eines zweiten hilfskraftbetätigten linearen Stellgliedes (50 bis 70) über eine Kurbel (50) verdrehbar ist, dadurch gekennzeichnet, daß das zweite Stellglied (50 bis 70) zwei in einer Druckdose (18, 60, 65) auslenkbare Membranen (55, 57) aufweist, die über einen Verbindungsbolzen (53) miteinander sowie mit einem Ende der Kurbel (50) verbunden sind, wobei die Kurbel (50) drehbar mit ihrem Ende im Verbindungsbolzen (53) gelagert ist.

2. Servoantrieb nach Anspruch 1, dadurch gekennzeichnet, daß das erste Stellglied (30 bis 42) eine in einer weiteren Druckdose (35 bis 38) auslenkbare weitere Membran (34) aufweist, die mit dem freien Ende der Schaltstange (12) verbunden ist.

3. Servoantrieb nach Anspruch 1 oder 2, dadurch gekennzeichnet, daß die Membranen (34') beidseitig mit demselben Druck beaufschlagbar sind und auf beiden Seiten unterschiedlich große Angriffsflächen für den Druck aufweisen.

4. Servoantrieb nach Anspruch 1, dadurch gekennzeichnet, daß beide Membranen (55', 57') jeweils von einer Seite mit demselben Druck beaufschlagbar sind und auf diesen Seiten unterschiedlich große Angriffsflächen für den Druck aufweisen.

5. Servoantrieb nach einem der Ansprüche 1 bis 3, dadurch gekennzeichnet, daß die wirksame Länge der Kurbel (50) etwa das Doppelte des Durchmessers der Schaltstange (12) beträgt.

6. Servoantrieb nach einem der Ansprüche 1 bis 5, dadurch gekennzeichnet, daß der wirksame Durchmesser der mindestens einen Membran (55, 57) mehr als das Vierfache der wirksamen Länge der Kurbel (50) beträgt.

7. Servoantrieb nach einem der Ansprüche 1 bis 6, dadurch gekennzeichnet, daß Druckräume (41, 42, 63, 68) der mindestens einen Druckdose (18, 60, 65) über Druck-Servoventilen oder Druck-Proportionalventilen an einen Druckanschluß (89) angeschlossen sind.

8. Servoantrieb nach einem der Ansprüche 1 bis 7, dadurch gekennzeichnet, daß die Membranen (55, 57) mit Rückstellfedern (69) in Wirkverbindung stehen.

## Revendications

1. Servocommande pour actionner la tringle de changement de vitesse (12) d'une boîte à étagement (11) d'un véhicule à moteur, dans laquelle la tringle de changement de vitesse (12) peut être déplacée axialement au moyen d'une première unité de positionnement linéaire (30 à 42), actionnée par une force auxiliaire, et peut pivoter par l'intermédiaire d'une manivelle (50) sous l'effet d'une seconde unité de positionnement linéaire (50 à 70), actionnée par une force auxiliaire; servocommande caractérisée en ce que la seconde unité de positionnement (50 à 70) présente deux membranes (55, 57) qui peuvent être déviées dans une enceinte sous pression (18, 60, 65) et qui sont reliées entre elles et avec une extrémité de la manivelle (50) au moyen d'un tige de liaison (53), l'extrémité de la manivelle (50) pouvant tourner dans un palier à l'intérieur de la tige de liaison (53).

2. Servocommande selon la revendication 1, caractérisée en ce que la première unité (30 à 42) présente une autre membrane (34), qui peut être déviée dans une autre enceinte sous pression (35 à 38) et qui est reliée à l'extrémité libre de la tringle de changement de vitesse (12).

3. Servocommande selon la revendication 1 ou 2, caractérisée en ce que la même pression peut être appliquée des deux côtés des membranes (34'), lesquelles présentent à la pression des surfaces actives de tailles différentes des deux côtés.

4. Servocommande selon la revendication 1, caractérisée en ce que les deux membranes (55', 57') peuvent recevoir d'un côté une même pression et présenter à la pression, sur lesdits côtés, des surfaces actives de tailles différentes.

5. Servocommande selon l'une des revendications 1 à 3, caractérisée en ce que la longueur efficace de la manivelle (50) est approximativement égale au double du diamètre de la tringle de changement de vitesse (12).

6. Servocommande selon l'une des revendications 1 à 5, caractérisée en ce que le diamètre efficace d'au moins une des membranes (55, 56) est plus de quatre fois supérieur à la longueur efficace de la manivelle (50).

7. Servocommande selon l'une des revendications 1 à 6, caractérisée en ce que les chambres sous pression (41, 42, 63, 66) d'au moins une des enceintes sous pression (18, 60, 65) sont raccordées à une prise de pression (89) par le biais de servo-soupapes ou de soupapes proportionnelles.

8. Servocommande selon l'une des revendications 1 à 7, caractérisée en ce que les membranes (55, 57) se trouvent en liaison active avec des ressorts de rappel (69).

**Claims**

1. A servo drive for operating a shift rod (12) of a stepped gearbox (11) of a motor vehicle, wherein the shift rod (12) can be axially displaced by means of a first power-assisted linear positioning element (30—42) and can be rotated by means of a second power-assisted linear positioning element (50—70) via a crank (50), characterized in that the second positioning element (50—70) comprises two diaphragms (55, 57) displaceable within a pressure cell (18, 60, 85), the diaphragms (55, 57) being connected with each other by means of a connection pin (53) and being connected with one terminal of the crank (50), the crank (50) being pivotably journalled with its terminal in the connection pin (53).

2. The servo drive of claim 1, characterized in that the first positioning element (30—42) comprises another diaphragm (34) which is arranged for being displaced in another pressure cell (35—38) and which is connected to the free end of the shift rod (12).

3. The servo drive of claim 1 or 2, characterized in that the diaphragms (34') can be subjected to the same pressure on both sides, but are provided with differently large active surfaces on the two sides.

4. The servo drive of claim 1, characterized in that both diaphragms (55', 57') are subjected on one side each to the same pressure, but have differently large active surfaces on those sides.

5. The servo drive of any of claims 1 through 3, characterized in that the crank (50) has an active length equalling approximately twice the diameter of the shift rod (12).

6. The servo drive of any of claims 1 through 5, characterized in that at least one diaphragm (55, 57) has an active diameter equalling more than four times the active length of the crank (50).

7. The servo drive of any of claims 1 through 6, characterized in that pressure compartments (41, 42, 63, 68) of the at least one pressure cell (18, 60, 65) are connected to a pressure connector (89) via pressure-servo-valves or pressure-proportional-valves.

8. The servo drive of any of claims 1 through 7, characterized in that the diaphragms (55, 57) coact with return springs (69).

Fig.1

Fig. 2

Fig. 4

Fig. 3

3